# EUROPÄISCHE PATENTSCHRIFT

(11) **EP 0 552 346 B1**
(45) Veröffentlichungstag und Bekanntmachung des Hinweises auf die Patenterteilung: **16.04.1997**
(21) Anmeldenummer: 92916994.4
(22) Anmeldetag: 13.08.1992
(51) Int. Cl.: H01L 41/09, H01L 41/12

(54) **ELEKTROAKTORISCHER MOTOR**
ELECTROACTORIC MOTOR
MOTEUR ELECTRO-ACTORIQUE

(30) Priorität: 13.08.1991 DE 4126667; 16.08.1991 DE 4127163; 21.03.1992 DE 4209230
(43) Veröffentlichungstag der Anmeldung: 28.07.1993
(73) Patentinhaber: Richter, Hans, D-86163 Augsburg (DE)
(72) Erfinder: Richter, Hans, D-86163 Augsburg (DE)
(74) Vertreter: Charrier, Rolf, Dipl.-Ing.
(86) Internationale Anmeldenummer: EP9201860
(87) Internationale Veröffentlichungsnummer: WO9304505

(56) Entgegenhaltungen:
- DE-A- 1 613 087
- FR-A- 2 557 241

## Beschreibung

Die Erfindung betrifft eine Vorrichtung nach dem Oberbegriff des Anspruchs 1.

Elektromotoren, die mittels des elektromagnetischen Prinzips elektrische in mechanische Energie umwandeln, haben den Nachteil, daß dabei elektrische und mechanische Trägheiten an den Rotoren bestehen.

Aktorelektrische Antriebe, bei denen entweder der umgekehrte piezoelektrische Effekt an polarisierten Kristallen, magnetostriktive Effekte o.ä. ausgenutzt werden, lassen niedrige Trägheiten erwarten. Es ist dabei erforderlich, den an Aktoren bei anliegender wechselnder Spannung entstehenden oszillierenden Hubweg aneinander zu reihen zu einem größere Weg. Es sind dazu verschiedene Vorschläge gemacht worden.

Einer dieser Vorschläge setzt den geringen Hub hydraulisch um in einen größeren Weg nach dem Prinzip der unterschiedlichen Kolbenflächen. Dieser Vorschlag hat aber den Nachteil, daß die Baugröße zu groß ist und die Hydraulik leicht undicht wird.

Bei sogenannten Ultraschallmotoren z.B. der Drehstellantrieb nach EP 0 112 454 B1 ist das Hauptproblem der mechanische Verschleiß an der Berührungsstelle zwischen Piezokristallaktor und Rotor, der in den meisten Fällen die Lebensdauer begrenzt oder aber sogar eine Funktion vor allem bei kleinen Baugrößen unmöglich macht.

Vorgeschlagen wurden deshalb verschleißarme Oberflächenvergütungen und weiche Zwischenlagen, die das harte Aufschlagen des Aktorendes auf den Rotor abmildert. Die Probleme sind damit aber nicht ausreichend gelöst.

Derartige Nachteile besitzt auch der sog. Inchwormmotor. Bei ihm klemmen sich abwechselnd zwei Piezokristallbüchsen auf einer runden Führungswelle fest, wobei ein Längspiezokristall zwischen diesen angeordnet, für den Vorschub der jeweils ungeklemmten sorgt. Seine Funktion ist sehr stark abhängig vom Verschleiß zwischen Piezo-Buchse und Welle.

Vorgeschlagen wurde auch, Piezokristalle radial oder winklig gegen einen Rotor schwingend stoßen zu lassen, wobei tangentiale und radiale Schwingungsamplituden auch steuerungsseits nicht sauber zu trennen sind und somit zusätzlicher Verschleiß entsteht.

Der sehr geringe Hub von Aktoren wird leicht durch Spiel und Verschleiß in der mechanischen Anordnung aufgehoben und damit die Vorrichtung wirkungslos gemacht. Andernfalls muß entsprechend steif und präzise und damit teuer gebaut werden.

Diese Probleme treten bei Linearmotoren wie bei Rotationsmotoren und Piezokristallen ebenso wie beim Einsatz anderer Aktoren auf.

Eine Vorrichtung gemäß dem Oberbegriff ist der FR-A-2 557 241 in der Anwendung bei einer Bremse zu entnehmen. Diese Vorrichtung weist zwei erste Spreizaktoren, zwei zweite Spreizaktoren und einen Vorschubaktor auf. Die Spreizaktoren wirken gegen ein Gehäuse, während der Vorschubaktor zwischen zwei Ankerteilen angeordnet ist. Ein Arbeitszyklus besteht darin, daß zuerst die zweiten Spreizaktoren gespreizt werden, womit das eine Ankerteil im Gehäuse festgeklemmt wird. Sodann wird der Vorschubaktor gespreizt, womit das andere Ankerteil in Richtung einer Bremsscheibe verschoben wird. Danach werden die ersten Spreizaktoren gespreizt, womit das andere Ankerteil im Gehäuse festgeklemmt wird. Der Vorschubaktor und die zweiten Spreizaktoren werden spannungslos und ziehen sich zusammen, womit durch eine Feder das eine Ankerteil in Richtung der Bremsscheibe nachgezogen wird. Sodann beginnt der Zyklus von neuem. Die Flächen des Gehäuses, gegen die die Spreizaktoren wirken, sind starr.

Es besteht die Aufgabe, einen aktorelektrischen Motor und seine elektronische Ansteuerung so zu verbessern, daß diese Nachteile beseitigt sind.

Gelöst wird diese Aufgabe mit den kennzeichnenden Merkmalen des Anspruches 1. Vorteilhafte Ausgestaltungen sind den Unteransprüchen entnehmbar.

Ausführungsbeispiele werden nachfolgend an Hand der Zeichnungen näher erläutert. Es zeigen:
Fig. 1: einen Schnitt durch einen Linearmotor längs der Linie C-C in Fig.2;
Fig. 2: einen Schnitt durch einen Linearmotor längs der Linie B-B in Fig 1;
Fig. 3: einen Schnitt durch einen Linearmotor längs der Linie A-A in Fig. 2;
Fig. 4: Einzelheit aus einem Linearmotor nach den Fig. 1 bis 3;
Fig. 5 und 6: Prinzipbild aus einem Linearmotor nach den Fig. 1 bis 3;
Fig. 7: einen Schnitt durch einen Rotationsmotor längs der Linie D-D in Fig. 8;
Fig. 8: einen Schnitt durch den Rotationsmotor längs der Linie E-E in Fig 7;
Fig. 9: einen Ausschnitt eines Rotationsmotors kombiniert mit einem Getriebe;
Fig. 10-17 : Phasenbilder eines Rotationsmotors;
Fig. 18 u.19 Frequenzdiagramm eines Rotationsmotors;
Fig. 20: Schaltbild einer Ansteuerungselektronik für Aktoren und
Fig. 21: ein Abschaltdiagramm

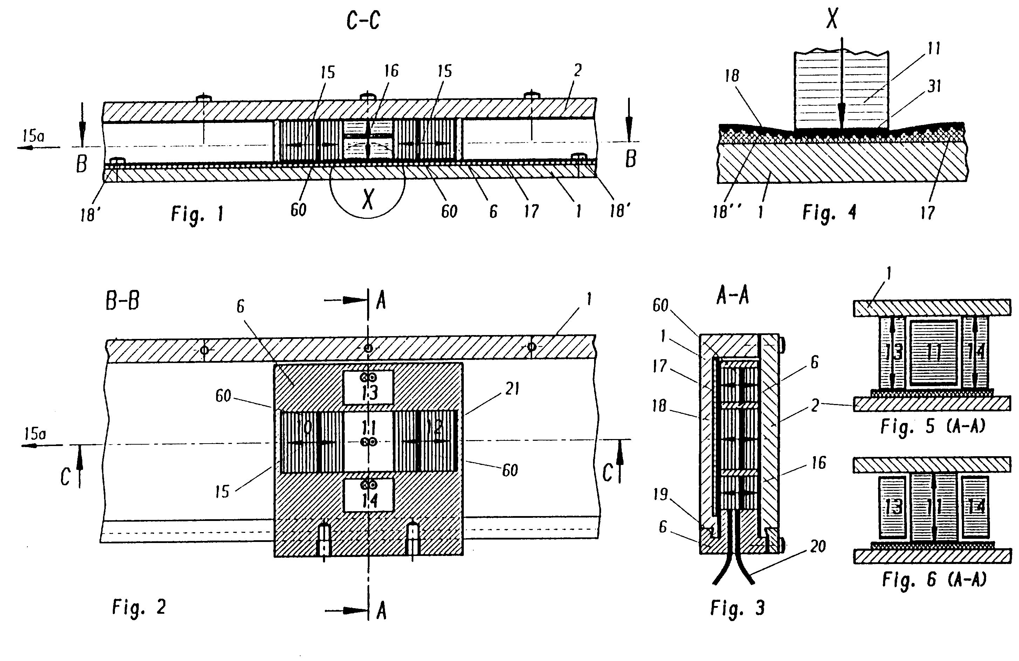

Einer Grundplatte 1 bei Fig 1 bis 6 liegt eine Kopfplatte 2 gegenüber. Beide stellen den Stator des Linearmotors und damit eine beliebig lange Führungsschiene dar. Zwischen der Grundplatte 1 und der Kopfplatte 2 gleitet der Anker 6. Im Anker 6 befinden sich drei Aktoren 11,13,14, die sich bei Spannungsanlegung in Pfeilrichtung 16 ausdehnen und zwei Aktoren 10 und 12, die sich bei Spannungsanlegung in Pfeilrichtung 15 ausdehnen. Die Aktoren 13 und 14 sind nur etwa halb so breit wie der Aktor 11.

Die Aktoren 11, 13 und 14 besitzen an der der Kopfplatte 2 und der Grundplatte 1 zugewandten Fläche einen dünnen Reibbelag. Auf der Grundplatte 1 ist ein Federbandstreifen 18 mit einem dazwischen einvulkanisierten Gummistreifen 17 befestigt und mit den Schrauben 18' gesichert.

Der Anker 6 ist durch Schwalbenschwanzführungen 19 in der Kopfplatte 2 und der Grundplatte 1 gleitend geführt.

Durch Vorspannung von Grundplatte 1 und Kopfplatte 2 wird der einvulkanisierte Gummistreifen 17 und das Stahlfederband 18 durch die unausgefahrenen Aktoren 11,13,14 in deren Bereich zusammengepresst (Fig.4), sodaß diese ständig unter Anpressdruck stehen. Bei ausgedehnten Aktoren 11,13,14 erhöht sich die Zusammenpressung. Das Stahlfederband 18 ist am Anfang und am Ende der Grundplatte 1 mit dieser zugfest verbunden. Es ist an seiner der Gummischicht 17 zugewandten Seite quer zur Vorschubrichtung 15a gezahnt, sodaß es in dieser Richtung biegeschlaff ist und in Querrichtung biegesteif.

Die Aktoren 10, 11 und 12 sind derart in den Anker 6 eingepaßt, daß sie in Pfeilrichtung 15a im Anker 6 verschiebbar sind um den mechanischen Hub eines Aktors 10 oder 12. Als Ausgleich ist die elastische Scheibe 21 vorgesehen. Die Aktoren 10 und 12 stützen sich am Aktor 11 bzw am Anker 6 ab.

Bei Spannungsbeaufschlagung des Aktors 11, presst dieser über das Stahlfederband 18 den Gummistreifen 17 noch zusätzlich zusammen, sodaß die Aktoren 13 und 14 entlastet sind (Fig 6) und sich frei bewegen können. Werden die Aktoren 13 und 14 spannungsbeaufschlagt, so erfolgt das gleiche (Fig.5) und der Aktor 11 kann sich frei bewegen.

Soll der Anker 6 sich nun in Pfeilrichtung 15a bewegen, so werden die einzelnen Aktoren über das Kabel 20 mit Strom versorgt und wie folgt angesteuert:
a.
   - Aktor 11 dehnen, klemmt sich fest.
   - Aktor 10 dehnen.
   - Aktor 12 um den gleichen Hub zusammenziehen.
   - Daraus ergibt sich:
   - Anker 6 schiebt sich vor,
   - Aktor 13 und 14 schieben sich vor.
b.
   - Aktor 13 und 14 dehnen, klemmen sich fest.
   - Aktor 11 zieht sich zusammen, entklemmt.
   - Aktor 10 zieht sich zusammen
   - Aktor 12 dehnt sich aus um den gleichen Hub.
   - Daraus ergibt sich:
   - Aktor 11 schiebt sich vor.

Dabei stützen immer die jeweils ausgedehnten Aktoren 11 oder 13 und 14 über ihre Reibbeläge 31 den Anker 6 gegenüber der Führungsschiene 1 und 2 ab und übernehmen die Vorschubkraft.

Aus den sich wiederholenden Ansteuerfolgen a. und b. ergibt sich die gewünschte Linearbewegung. Durch entsprechende Änderung der Abfolge ist die Richtung zu bestimmen.

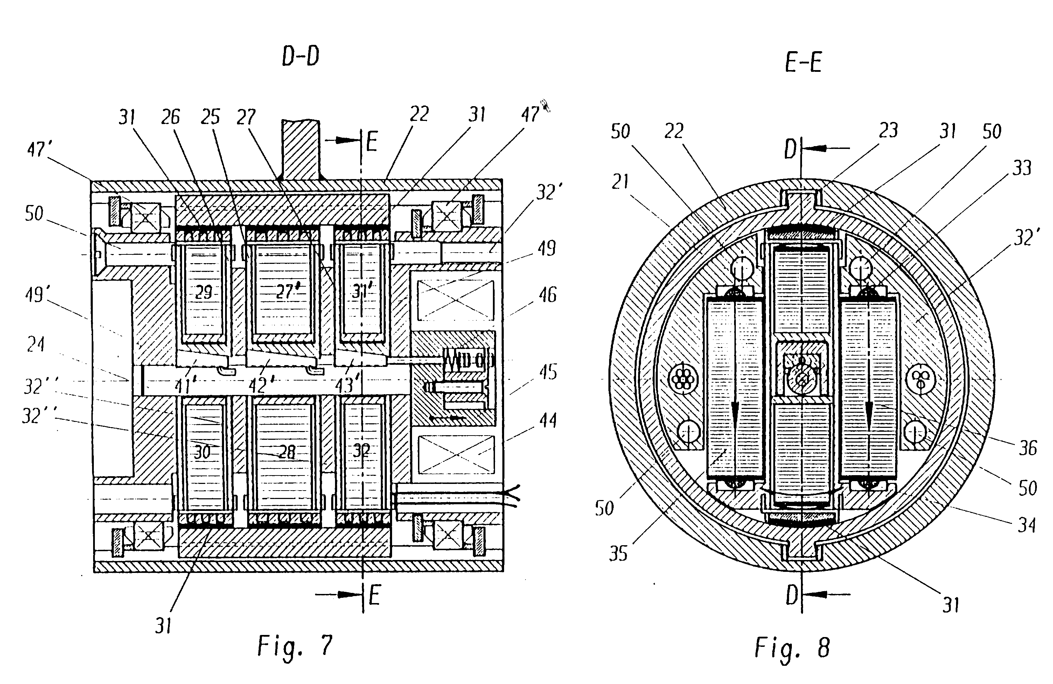

Der Rotationsmotor nach Fig 7 und 8 arbeitet im Prinzip wie der Linearmotor. Anstelle des Gummistreifens 17 und des Stahlfederbandes 18 besitzt er den durch die Aktorsäulen 25,26 und 27 elliptisch federnd vorgespannten Zylinder 21, der mit zwei Paßfedern 23 in entsprechenden Nuten des Gehäuses 22 radial gleitend verdrehfest gelagert ist. Der Zylinder 21 ist schon durch Aktorsäulen 25,26 und 27 in unausgefahrenen Zustand elliptisch verformt und wird durch den Aktorhub noch zusätzlich verformt.

Der Motorabtriebsteil 32' ist mit den Kugellagern 47 und 47'in dem Gehäuse 22 drehbar gelagert. Der Motorabtriebsteil 32' besteht aus den beiden Flanschen 49 und 49' und den Zwischenwänden 32", die durch die Zuganker 50 zusammengehalten werden.

Um das Zentrum des Zylinders 21 auf der Welle 24 schwingt die Aktorsäule 25, und dazu gegenläufig die Aktorsäulen 26 und 27. Die Aktorsäulen 25,26,27 beinhalten konstruktiv beding jeweils zwei Aktoren, die über eine konstruktive Überbrückung der Welle 24 zusammenarbeiten. Dehnen sich die Aktoren 27' und 28, so pressen sie den Zylinder 21 über ihren Reibbelag 31 noch mehr elliptisch und entlasten die Aktoren 31',32, 29 und 30, sodaß diese frei schwingen können.

Die Aktorsäulen 26 und 27 und gegenläufig die Aktorsäule 25 werden schwingend angetrieben durch die einerseits im Kugellager 33 im Motorabtriebsteil 32' und anderseits im Kugellager 34 in den Aktorsäulen 25,26,27 gelagerte Schwingaktoren 35 und 36. Nichtgezeichnet befinden sich natürlich für die Aktorsäulen 25 und 27 ebenfalls entsprechende Schwingaktoren 35' und 36'.

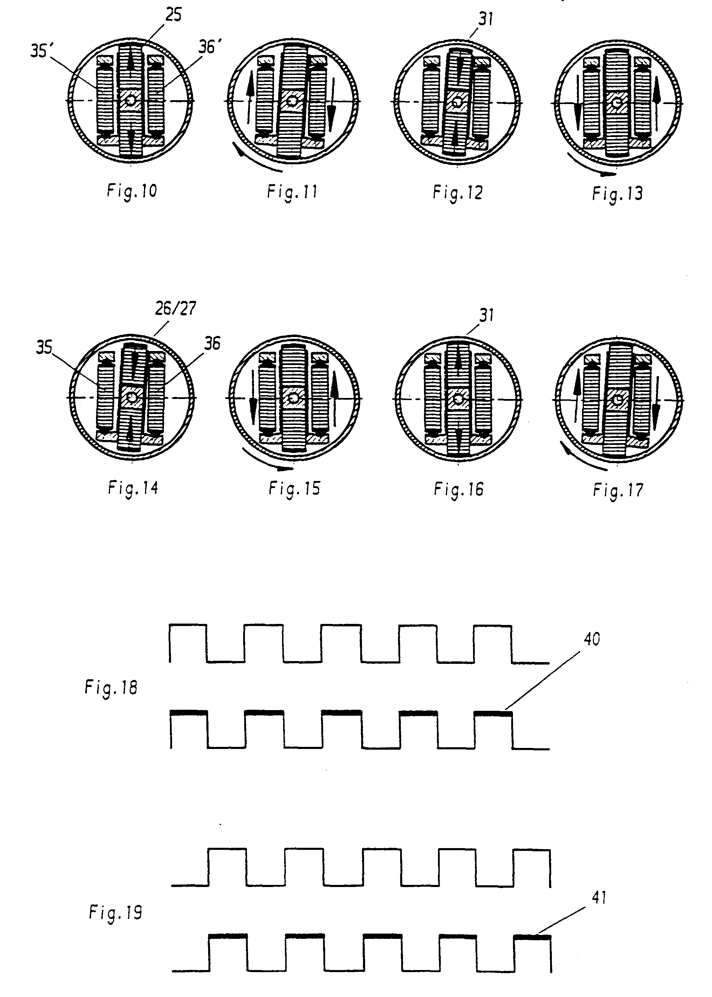

Durch das zyklische Ansteuern der insgesamt zwöll Aktoren im Rotationsmotor Fig 7 und 8 dreht sich das Motorabtriebsteil entsprechend den Fig. 10-17. Die Diagramme Fig 18 und Fig 19 zeigen mit den Strichen 40 und 41 die aus den einzelnen Laufschritten der Aktoren im Zylinder 21 entstehende gewünschte Drehbewegung.

Setzungen und Verschleiß in den Aktoren 27-32 und 11,13 und 14 werden durch den Federrückstellweg des Zylinders 21 bzw. durch das Stahlfederband 18 und die Gummischicht 17 kompensiert und von den Schwingaktoren 35,36,35' und 36'durch die Ziehkeile 41',42',43', die durch eine Magnetspule 44 und einem Anker 45 im Betrieb ständig nach außen gezogen werden und in Ruhe durch die Druckfeder 46 wieder zurück.

Bei der erfindungsgemäßen vorrichtung stehen mindestens drei Spreiz-Aktoren quer zur Vorschubrichtung nebeneinander, wobei diese sich ständig abwechselnd einmal der mittlere und einmal die beiden äußeren gegen ein elastisch vorgespanntes Abtriebselement abstützen. VorschubAktoren, die in Vorschubrichtung wirken, erzeugen die Vorschubkraft, in dem sie zwischen dem jeweils festgeklemmten Spreiz-Aktoren und dem Anker sich abstützen. Der jeweils eingezogene Spreiz-Aktor ist somit ohne Last und kann im vom anderen Spreiz-Aktor offengehaltenen Freiraum reibungsfrei zurückschwingen.

Die Aktoren sind somit gegen Bruch gesichert, da sie immer gegen ein dämpfendes Element stoßen, statt gegen einen harten Rotor. Auch ist der Verschleiß zwischen Reibbelag 31 und dem elastischen Abtriebselement minimiert, da die Spreizaktoren und die Schwenkaktoren völlig ohne Überschneidung separat elektronisch angesteuert werden. Zusätzlich kompensiert das elastisch vorgespannte Abtriebselement evtl. Verschleiß automatisch, da es immer sofort nachdrückt. Auch finden ausschließlich verschleißarme Haftreibungen und keine verschleißreiche Gleitreibungen statt und die Haftreibungsflächen sind reichlich groß dimensionierbar, sodaß der rel. Flächendruck gering ist.

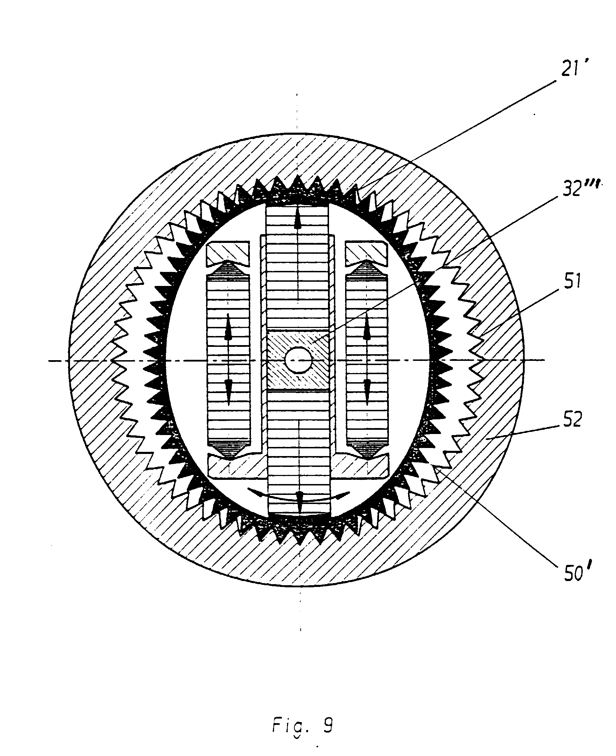

Erfindungsgemäß kann der elastische Zylinder 21' auch wie in Fig. 9 eine Außenverzahnung 50' haben mit der er in einer Innenverzahnung 51 im Gestell 52 abwälzend im Eingriff ist, wobei die Außenverzahnung mindestens zwei Zähne mehr hat. Der Motorabtriebsteil 32"' muß bei dieser Variante umläufig sein und die Stromzuführung über Kollektoren erfolgen. Diese, als Harmonic Drive bekanntgewordenen Getriebe ermöglichen in Verbindung mit dem erfindungsgemäßen aktorelektrischen Motor eine große Momentenübersetzung.

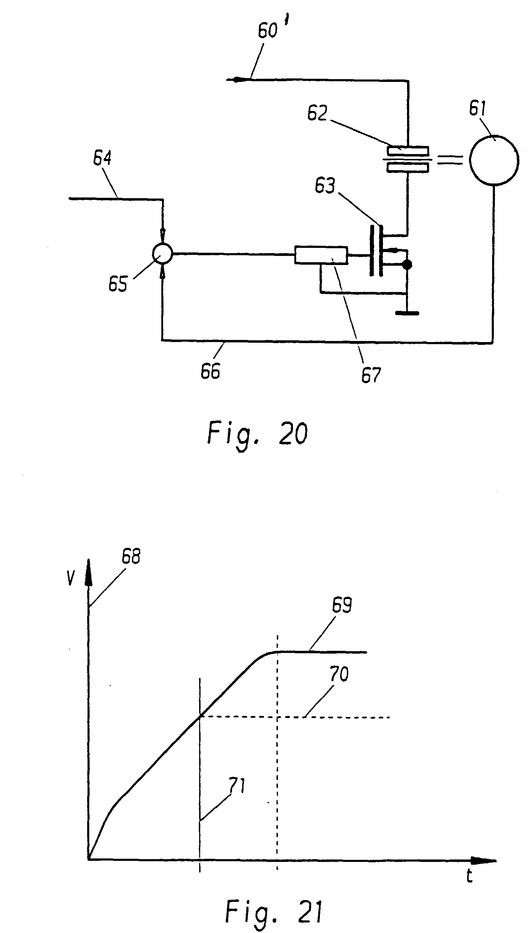

Bei Fig. 20 bedeuten: 60' Vmax, 61 Wegmeßgerät, 62 Piezoaktor, 63 Leistung-MOS FET, 64 Sollhub, 65 Soll/Istvergleich, 66 Ist-Hub, 67 Abschalteinrichtung. Bei Fig. 21 bedeuten: 68 V Hub, 69 Vmax=Max.Hub, 70 Teilhub, 71 Abschaltung Vorzugsweise werden erfindungsgemäß Piezoaktoren eingesetzt. Da diese einen elektrischen Kondensator mit erheblichen Kapazitäten darstellen, wird der Piezoaktor über einen schnellen Schalter, wie z.B. Leistungs MOS-FET mit Energie beaufschlagt. Die angelegte Spannung entspricht der Spannung für den vollen Hub des Piezoaktors. Da der Piezoaktor als elektrisches Integral wirkt, wird der Hub integriert über die Zeit vom Piezoaktor durchgeführt. Über ein Wegmessystem oder integrierend über eine Piezo- Sensorscheibe im Piezoaktor selbst, wird der Hub gemessen. Hat der Piezoaktor den Sollweg durchfahren, wird die Energiezuführung abgeschaltet. Dieser Abschaltvorgang muß schnell genug erfolgen, um den Hub in der Weg-Toleranzgrenze zu halten. Leistungs-MOS-FET in Verbindung mit Abschaltmaßnahmen wie Reduzierung der Gate-Source-Spannung nach dem Durchschalten der MOS-FET auf die Halt-Spannung ermöglichen dies. Als Wegmessystem kann auch eine druckempfindliche Sensorscheibe Verwendung finden, aus deren Signal über Integration eine Wegsignal erzeugt wird.

## Patentansprüche

1. Vorrichtung zum Antrieb eines Ankers (6, 32'), der zwischen den Flächen eines Stators angeordnet ist und der mindestens einen ersten Spreizaktor (11; 25; 27', 28), mindestens einen zweiten Spreizaktor (13, 14; 26, 27; 29, 30, 31', 32) und mindestens einen Vorschubaktor (10, 12; 35, 36, 35', 36') trägt, die Wirkrichtung des Vorschubaktors (10, 12; 35, 36, 35', 36') rechtwinklig zu derjenigen der Spreizaktoren (11, 13, 14; 25, 26, 27; 27', 28, 29, 30, 31', 32) verläuft, bei Anlegen einer Spannung an den ersten Spreizaktor (11; 25; 27', 28) dieser sich spreizt und zwischen den Flächen des Stators festklemmt, bei Anlegen einer Spannung an den Vorschubaktor (10, 12; 35, 36, 35', 36') dieser sich spreizt und den Anker (6, 32') in Vorschubrichtung (15a) verschiebt, im Wechsel dazu bei Anlegen einer Spannung an den zweiten Spreizaktor (13, 14; 26, 27; 29, 30, 31', 32) dieser sich spreizt und zwischen den Flächen des Stators festklemmt und hierbei der sich zusammenziehende Vorschubaktor (10, 12; 35, 36, 35', 36') den zusammengezogenen ersten Spreizaktor (11; 25; 27', 28) in Vorschubrichtung (15a) nachführt, **dadurch gekennzeichnet,** daß die Spreizaktoren (11, 13, 14; 25, 26, 27; 27', 28, 29, 30, 31', 32) quer zur Vorschubrichtung nebeneinander angeordnet sind, mindestens eine der Flächen des Stators elastisch ausgebildet ist, die Spreizaktoren (11, 13, 14; 25, 26, 27; 27', 28, 29, 30, 31', 32) im zusammengezogenen Zustand zwischen den Flächen elastisch gehalten werden und der jeweils gespreizte Spreizaktor (11 bzw. 13, 14; 25 bzw. 26, 27; 27', 28 bzw. 29, 30, 31', 32) die elastische Fläche so weit deformiert, daß der andere Spreizaktor (13, 14 bzw. 11; 26, 27 bzw. 25; 29, 30, 31', 32 bzw. 27', 28) zwischen den Flächen frei beweglich ist.

2. Vorrichtung nach Anspruch 1, **dadurch gekennzeichnet,** daß beidseits des ersten Spreizaktors (11; 25; 27', 28) zwei zweite Spreizaktoren (13, 14; 26, 27; 29, 30, 31', 32) angeordnet sind, die halb so breit sind wie der erste Spreizaktor (11; 25; 27', 28).

3. Vorrichtung nach Anspruch 1 oder 2, **dadurch gekennzeichnet,** daß beidseits des ersten Spreizaktors (11; 25; 27', 28) zwei Vorschubaktoren (10, 12; 35, 36, 35', 36') angeordnet sind, die sich jeweils einerseits am Anker (6, 32') und andererseits am ersten Spreizaktor (11; 25; 27', 28) abstützen.

4. Vorrichtung nach einem der Ansprüche 1 bis 3, **dadurch gekennzeichnet,** daß die elastische, deformierbare Fläche aus einem Federbandstreifen (18) mit einem einvulkanisierten Gummistreifen (17) besteht, der auf einer von zwei den Stator bildenden Platten (1, 2) angeordnet ist.

5. Vorrichtung nach einem der Ansprüche 1 bis 3, **dadurch gekennzeichnet,** daß die elastischen, deformierbaren Flächen des Stators von einem drehfest gelagerten Zylinder (21) gebildet werden, der durch die Spreizaktoren (25, 26, 27; 27', 28, 29, 30, 31', 32) elliptisch deformiert ist, die von einem den Anker bildenden Motorabtriebsteil (32') eines Rotationsmotors gelagert werden.

6. Vorrichtung nach Anspruch 5, **dadurch gekennzeichnet,** daß die zwei ersten Spreizaktoren (27', 28) eine erste Spreizaktorsäule (25) und jeweils zwei zweite Spreizaktoren (29, 30, 31', 32) zwei zweite Spreizaktorsäulen (26, 27) bilden und die Spreizaktoren (27', 28, 29, 30, 31', 32) jeweils zwischen der Welle (24) des Motorabtriebsteils (32') und dem Zylinder (21) angeordnet sind.

7. Vorrichtung nach Anspruch 6, **dadurch gekennzeichnet,** daß die Vorschubaktoren (35, 36, 35', 36') sich jeweils über ein Kugellager (33, 34) einerseits am Motorabtriebsteil (32') und andererseits an der ersten Spreizaktorsäule (25) abstützen.

8. Vorrichtung nach Anspruch 6 oder 7, **dadurch gekennzeichnet,** daß den beiden zweiten Spreizaktorsäulen (26, 27) jeweils zwei weitere Vorschubaktoren (35', 36') zugeordnet sind.

9. Vorrichtung nach einem der Ansprüche 5 bis 8, **dadurch gekennzeichnet,** daß der Zylinder (21) eine Außenverzahnung (50') aufweist, die sich in einer Innenverzahnung (51) abwälzt, die mindestens zwei Zähne mehr besitzt als die Außenverzahnung (50).

## Claims

1. A device for driving a core (6, 32') which is arranged between the faces of a stator and carries at least one first spreader-actor (11; 25; 27', 28), at least one second spreader-actor (13, 14; 26, 27; 29, 30, 31', 32) and at least one feed-actor (10, 12; 35, 36, 35', 36'), with the direction of action of the feed-actor (10, 12; 35, 36, 35', 36') running at right angles to those of the spreader-actors (11, 13, 14; 25, 26, 27; 27', 28, 29, 30, 31', 32), so that upon applying a voltage to the first spreader-actor (11; 25; 27', 28) it spreads and becomes firmly clamped between the faces of the stator, and upon applying a voltage to the feed-actor (10, 12; 35, 36, 35', 36') it spreads and shifts the core (6, 32') in the direction of feed (15a), whilst in alternation with that, upon applying a voltage to the second spreader-actor (13, 14; 26, 27; 29, 30, 31', 32) it spreads and becomes firmly clamped between the faces of the stator and hereupon the contracting feed actor (10, 12; 35, 36, 35', 36') carries after it in the direction of feed (15a) the contracted first spreader-actor (11; 25; 27', 28), **characterized in that**
the spreader-actors (11, 13, 14; 25, 26, 27; 27', 28, 29, 30, 31', 32) are arranged side by side across the direction of feed, at least one of the faces of the stator is made elastic, the spreader-actors (11, 13, 14; 25, 26, 27; 27', 28, 29, 30, 31', 32) in the contracted state are held elastically between the faces and the spreader-actor (11 resp. 13, 14; 25 resp. 26, 27; 27', 28 resp. 29, 30, 31', 32) which is spread at any one time deforms the elastic face far enough for the other spreader-actor (13, 14 resp. 11; 26, 27 resp. 25; 29, 30, 31', 32 resp. 27', 28) to be freely movable between the faces.

2. A device as in Claim 1, **characterized in that** two second spreader-actors (13, 14; 26, 27; 29, 30, 31', 32) which are half as wide as the first spreader-actor (11; 25; 27', 28) are arranged on opposite sides of the first spreader-actor (11; 25; 27', 28).

3. A device as in Claim 1 or2, **characterized in that** two feed actors (10, 12; 35, 36, 35', 36') which respectively bear at one side against the core (6, 32') and at the other against the first spreader-actor (11; 25; 27', 28), are arranged on opposite sides of the first spreader-actor (11; 25; 27', 28).

4. A device as in one of the Claims 1 to 3, **characterized in that** the elastic deformable face consists of a spring band strip (18) with a rubber strip (17) vulcanized onto it, which is arranged on one of two plates (1, 2) forming the stator.

5. A device as in one of the Claims 1 to 3, **characterized in that** the elastic deformable faces of the stator are formed by a cylinder (21) which is supported to be unable to turn and is deformable elliptically by the spreader-actors (25, 26, 27; 27', 28, 29, 30, 31', 32) which are supported by a part (32') of the drive of a rotary motor, which forms the core.

6. A device as in Claim 5, **characterized in that** the two first spreader-actors (27', 28) form a first spreader-actor column (25) and every two second spreader-actors (29, 30, 31', 32) form two second spreader-actor columns (26, 27) and in each case the spreader-actors (27', 28, 29, 30, 31', 32) are arranged between the shaft (24) of the part (32') of the motor drive and the cylinder (21).

7. A device as in Claim 6, **characterized in that** the feed-actors (35, 36, 35', 36') bear respectively via a ball bearing (33, 34) at one side against the part (32') of the motor drive and at the other against the first spread-actor column (25).

8. A device as in Claim 6 or 7, **characterized in that** two further feed-actors (35, 36') at a time are associated with the pair of second spreader-actor columns (26, 27).

9. A device as in one of the Claims 5 to 8, **characterized in that** the cylinder (21) exhibits an outer set of teeth (50') which rolls in an inner set of teeth (51) which has at least two more teeth than the outer set of teeth (50).

## Revendications

1. Dispositif pour entraîner une armature (6, 32') qui est disposée entre les surfaces d'un stator et qui porte au moins un premier élément d'actionnement à extension (11 ; 25; 27', 28), au moins un deuxième élément d'actionnement à extension (13, 14 ; 26, 27 ; 29, 30, 31', 32) et au moins un élément d'actionnement destiné à l'avance (10, 12 ; 35, 36, 35', 36'), cependant que la direction d'action de l'élément d'actionnement destiné à l'avance (10, 12 ; 35, 36, 35', 36') s'étend perpendiculairement à celle des éléments d'actionnement à extension (11, 13, 14 ; 25, 26, 27 ; 27', 28, 29, 30, 31', 32), que lors de l'application d'une tension au premier élément d'actionnement à extension (11 ; 25 ; 27', 28), celui-ci s'allonge et se bloque entre les surfaces du stator, que lors de l'application d'une tension à l'élément d'actionnement destiné à l'avance (10, 12 ; 35, 36, 35', 36'), celui-ci s'allonge et déplace l'armature (6, 32') dans la direction de l'avance (15a), qu'alternativement avec cela, lors de l'application d'une tension sur le deuxième élément d'actionnement à extension (13, 14 ; 26, 27 ; 29, 30, 31', 32), celui-ci s'allonge et se bloque entre les surfaces du stator, et qu'alors l'élément d'actionnement destiné à l'avance (10, 12 ; 35, 36, 35', 36') qui se contracte suit le premier élément d'actionnement à extension contracté (11 ; 25 ; 27', 28) dans la direction de l'avance (15a), caractérisé par le fait que les éléments d'actionnement à extension (11, 13, 14 ; 25, 26, 27 ; 27', 28, 29, 30, 31', 32) sont juxtaposés transversalement par rapport à la direction de l'avance, qu'au moins l'une des surfaces du stator est réalisée élastiquement, que les éléments d'actionnement à extension (11, 13, 14 ; 25, 26, 27 ; 27', 28, 29, 30, 31', 32) à l'état contracté sont maintenus élastiquement entre les surfaces, et que l'élément d'actionnement à extension (11, respectivement 13, 14 ; 25, respectivement 26, 27 ; 27', 28, respectivement 29, 30, 31', 32) déforme suffisamment la surface élastique pour que l'autre élément d'actionnement à extension (13, 14, respectivement 11 ; 26, 27, respectivement 25 ; 29, 30, 31', 32, respectivement 27', 28) puisse se déplacer librement entre les surfaces.

2. Dispositif selon la revendication 1, caractérisé par le fait que deux deuxièmes éléments d'actionnement à extension (13, 14 ; 26, 27 ; 29, 30, 31', 32) sont disposés des deux côtés du premier élément d'actionnement à extension (11 ; 25 ; 27', 28), et que leur largeur est la moitié de celle du premier élément d'actionnement à extension (11 ; 25; 27', 28).

3. Dispositif selon la revendication 1 ou 2, caractérisé par le fait que deux éléments d'actionnement destinés à l'avance (10, 12 ; 35, 36, 35', 36') sont disposés des deux côtés du premier élément d'actionnement à extension (11 ; 25; 27', 28), et qu'ils s'appuient chacun sur l'armature (6, 32'), d'une part, et sur le premier élément d'actionnement à extension (11 ; 25 ; 27', 28), d'autre part.

4. Dispositif selon l'une des revendications 1 à 3, caractérisé par le fait que la surface élastique et déformable est constituée par une bande en acier à ressort (18) qui est pourvue d'une bande de caoutchouc (17) fixée par vulcanisation et qui est disposée sur l'une des deux plaques (1, 2) constituant le stator.

5. Dispositif selon l'une des revendications 1 à 3, caractérisé par le fait que les surfaces élastiques et déformables du stator sont constituées par un cylindre monté fixe en rotation (21) qui est déformé elliptiquement par les éléments d'actionnement à extension (25, 26, 27 ; 27', 28, 29, 30, 31', 32), ceux-ci étant montés dans une partie de sortie du moteur (32') d'un moteur rotatif, laquelle constitue l'armature.

6. Dispositif selon la revendication 5, caractérisé par le fait que les deux premiers éléments d'actionnement à extension (27', 28) constituent une première colonne d'éléments d'actionnement à extension (25), que deux deuxièmes éléments d'actionnement à extension (29, 30, 31', 32) constituent à chaque fois deux deuxièmes colonnes d'éléments d'actionnement à extension (26, 27), et que les éléments d'actionnement à extension (27', 28, 29, 30, 31', 32) sont à chaque fois disposés entre l'arbre (24) de la partie de sortie du moteur (32') et le cylindre (21).

7. Dispositif selon la revendication 6, caractérisé par le fait que les éléments d'actionnement destinés à l'avance (35, 36, 35', 36') s'appuient chacun, par l'intermédiaire d'un palier à billes (33, 34), sur la partie de sortie du moteur (32'), d'une part, et sur la première colonne d'éléments d'actionnement à extension (25), d'autre part.

8. Dispositif selon la revendication 6 ou 7, caractérisé par le fait que deux autres éléments d'actionnement destinés à l'avance (35', 36') sont à chaque fois associés aux deux deuxièmes colonnes d'éléments d'actionnement à extension (26, 27).

9. Dispositif selon l'une des revendications 5 à 8, caractérisé par le fait que le cylindre (21) présente une denture extérieure (50') qui roule dans une denture intérieure (51), celle-ci comportant au moins deux dents de plus que la denture extérieure (50').
